Europäisches Patentamt

European Patent Office

Office européen des brevets

(11) Numéro de publication: **0 633 050 A1**

## DEMANDE DE BREVET EUROPEEN

(21) Numéro de dépôt: **93401735.1**

(51) Int. Cl.6: **B01D 53/02**

(22) Date de dépôt: **05.07.93**

(43) Date de publication de la demande:
**11.01.95 Bulletin 95/02**

(84) Etats contractants désignés:
**BE DE ES GB IT NL SE**

(71) Demandeur: **CARRAR**
**13 Rue de Témara**
**F-78104 mSaint Germain en Laye Cédex (FR)**

(72) Inventeur: **JANSEN**
**Julianalaan 136**
**2628 BL DELFT (NL)**
Inventeur: **DAVIAUD née PIRET Sonia**
**18 Rue Bellavoine**
**78230 LE PECO (FR)**
Inventeur: **VAN BEKKUM**
**Julianalaan 136**
**2628 BL DELFT (NL)**

(74) Mandataire: **Boulinguiez, Didier**
**Cabinet Plasseraud**
**84, rue d'Amsterdam**
**F-75440 Paris Cedex 09 (FR)**

(54) **Utilisation de déca-dodécasil 3R pour l'adsorption et la détection de gaz carbonique.**

(57) L'invention a pour objet l'utilisation de déca-dodécasil 3R pour l'adsorption de gaz carbonique à partir d'un milieu gazeux le contenant. Elle vise plus spécifiquement l'utilisation de déca-dodécasil 3R pour l'extraction de gaz carbonique ainsi que pour la mesure et/ou la détection du $CO_2$ dans des milieux gazeux.

EP 0 633 050 A1

Rank Xerox (UK) Business Services
(3.10/3.09/3.3.4)

La présente invention a pour objet l'utilisation de déca-dodécasil 3R pour l'adsorption de gaz carbonique à partir d'un milieu gazeux le contenant.

Elle a plus particulièrement pour objet l'utilisation de déca-dodécasil 3R pour l'extraction de gaz carbonique à partir d'un milieu gazeux le contenant, ainsi qu'un dispositif d'extraction de gaz carbonique à partir de mélanges gazeux contenant le $CO_2$, tels que par exemple l'air, l'air contaminé par la respiration humaine, animale ou végétale, et les gaz de combustion.

L'invention a également pour objet l'utilisation de déca-dodécasil 3R pour la détection et/ou la mesure du gaz carbonique dans un milieu gazeux le contenant, ainsi qu'un dispositif de détection et/ou de mesure du gaz carbonique dans ledit milieu.

L'invention vise enfin un procédé de régénération de déca-dodécasil 3R ayant été utilisé pour l'adsorption de gaz carbonique.

Divers procédés d'élimination du gaz carbonique dans des milieux gazeux le contenant ont déjà été décrits dans la littérature.

Cette élimination s'avère en effet souhaitable ou même indispensable dans certaines applications. C'est le cas par exemple du traitement de l'air dans des ambiances confinées habitées par des organismes humains, animaux ou végétaux, où il est indispensable d'assurer l'élimination continue du $CO_2$ émis par lesdits organismes. Ainsi, en ne prenant pour exemple que le cas des sous-marins ou des vaisseaux spatiaux, on comprendra aisément qu'une purification efficace de l'air ambiant doit être assurée afin de permettre la vie à l'intérieur de ces bâtiments. De même, il est souhaitable dans d'autres applications d'abaisser, de façon la plus efficace et la moins onéreuse possible, la teneur en $CO_2$ de l'air ambiant : c'est le cas notamment pour le développement et la conservation des légumes et des agrumes.

Le gaz carbonique est généralement éliminé par absorption, ou par adsorption, notamment sur des tamis moléculaires dont certains types de zéolites, ou sur des charbons activés.

Mais les procédés d'adsorption du $CO_2$ actuellement connus souffrent de plusieurs désavantages. Tout d'abord, ils n'offrent pas toujours la sélectivité recherchée pour le $CO_2$ et on assiste donc, avec la plupart des adsorbants utilisés à l'heure actuelle, à l'adsorption d'autres gaz que le $CO_2$, dont notamment les aromatiques, ce qui diminue, d'une façon ou d'une autre, les performances et donc l'économie du système.

D'autre part, les adsorbants actuellement utilisés pour l'adsorption du gaz carbonique présentent généralement des propriétés hydrophiles. Même si celles-ci sont limitées, elles provoquent quand même l'adsorption de quantités non négligeables d'eau, ce qui diminue là encore les performances recherchées puisque les atmosphères traitées comportent le plus souvent un taux d'humidité important. Le bon fonctionnement et la régénération des systèmes d'adsorption conventionnels exigent de ce fait la consommation de grandes quantités d'énergie du fait de cette adsorption concurrente de l'eau.

Par ailleurs, la présence d'humidité peut également conduire à la dégradation ou à la dégénérescence de certains adsorbants.

Enfin, les conditions opératoires requises par certains adsorbants afin de permettre une élimination adéquate du gaz carbonique ne sont pas simples ou commodes à assurer. Ainsi, l'adsorption du gaz carbonique ne se réalise efficacement sur certains adsorbants qu'à des températures relativement basses ou au contraire à des températures relativement hautes (en vue de dilater les pores ou d'augmenter l'énergie cinétique), ce qui entraîne bien évidemment des contraintes au niveau de la construction et du fonctionnement des appareillages, ainsi qu'une consommation importante d'énergie. De même, la désorption du $CO_2$, et donc la régénération des adsorbants, peut parfois se révéler difficile à obtenir. D'autre part, des pressions très supérieures à la pression normale sont dans certains cas nécessaires afin d'obtenir une adsorption du $CO_2$ suffisante.

Il existe donc à l'heure actuelle un réel besoin pour un procédé d'adsorption du gaz carbonique à partir de milieux gazeux le contenant qui soit extrêmement sélectif vis-à-vis du $CO_2$, dont les performances soient relativement insensibles aux taux d'humidité présents dans les milieux à traiter, dont les conditions opératoires (température et pression notamment) soient très proches de celles existant normalement dans les environnements visés, qui soit simple et économique à mettre en oeuvre, et enfin qui mette en oeuvre un adsorbant facilement régénérable, cette facilité de régénération permettant la purification continue d'un milieu à l'aide d'un appareillage de volume réduit.

Or, la Société Demanderesse a eu le mérite de trouver, à la suite de nombreux travaux et recherches, que tous ces objectifs pouvaient être atteints grâce à l'utilisation d'un composé particulier, le déca-dodécasil 3R.

Et l'invention a donc pour objet l'utilisation du déca-dodécasil 3R pour l'adsorption du gaz carbonique à partir d'un milieu gazeux le contenant.

Le déca-dodécasil 3R est, avant traitement thermique, un composé clathrate de formule $120\ SiO_2.6\ M^{10}.9\ M^{12}.6\ M^{19}$ avec $M^{12} = N_2$ et $M^{19} = C_{10}\ N\ H_{17}$ (1-aminoadamantane). Le 1-aminoadamantane est la molécule hôte présente au cours de la synthèse et qui est piégée dans la cage à 19 côtés du déca-dodécasil 3R. Cependant, un traitement thermique, à une température de 500°C par exemple, conduit à la décomposition des molécules hôtes, et les fragments obtenus sont évacués en dehors des cages, transformant ainsi le clathrasil en une phase possédant des propriétés de zéolite, présentant une charpente comportant trois types différents de cavités interconnectées.

Le déca-dodécasil 3R est un cas particulier d'un alumino-silicate dans lequel le rapport Si/Al est infini, créant ainsi une "phase toute silice". Aucun cation n'est présent dans le volume poreux, et le volume poreux est optimal.

Une caractéristique additionnelle unique de ce tamis moléculaire silicique est l'absence de sites de surface "ioniques" tels que $SiO^-$ et $SiOH$. Ceci conduit à une surface interne présentant des propriétés hydrophobes.

Les caractéristiques principales du déca-dodécasil 3R peuvent être résumées de la façon suivante :
- famille des clathrasils, avec des propriétés de zéolite à l'issue du traitement thermique,
- phase "toute silice", présentant des propriétés hydrophobes,
- déca-dodécasil 3R : 120 $SiO_2$. $6M^{10}$. $9M^{12}$. $6M^{19}$ avec $M^{12}$ = $N_2$ et $M^{19}$ = (1-aminoadamantane) avant traitement thermique,
- volume de maille :
  a = 13.86 Å,
  b = 13.86 Å,
  c = 40.89 Å.

La maille élémentaire étant pyramidale, le volume est le suivant :

$$volume = 13.86 . 40.89 . 13.86 \sin 60 = 6802 \text{ Å}^3$$

- densité après traitement thermique, et donc sans molécules hôtes : 1,76 $g/cm^3$,
- 3 dimensions de cages :
  (1) cages dodécahédriques pentagonales ($M^{12}$) [$5^{12}$], volume d'environ 70 $Å^3$ formées par 20 unités ($SiO_4$), cage fondamentale,
  (2) petites cages décahédriques ($M^{10}$) [$4^3$ $5^6$ $6^1$], volume d'environ 35 $Å^3$, cage fondamentale,
  (3) grandes cages 19-hédriques ($M^{19}$) [$4^3$ $5^{12}$ $6^1$ $8^3$], volume d'environ 350 $Å^3$ molécule hôte (avant traitement thermique) : 1-aminoadamantane sites potentiels pour le piégeage des molécules de $CO_2$
- anneaux à 8 membres (3.6 Å x 4.4 Å) formant les canaux entre les cavités les plus larges,

La préparation, les propriétés et les caractéristiques du déca-dodécasil 3R ont été décrites notamment dans les publications suivantes, auxquelles on pourra se référer:
- H. GIES
  J. Inclusion Phenomena 2, 275-278 (1984) "Studies on clathrasils VII
  A new clathrate compound of silica : synthesis, crystallographic, and thermal properties"
- H. GIES
  Zeitschrift fur Kristallographie 175, 93-104 (1986)
  "Studies on clathrasils - IX - Crystal structure of deca-dodecasil 3R, the missing link between zeolites and clathrasils".
- R.P. GUNAWARDANE, H. GIES and F. LIEBAU
  Z. Anorg. Allg. Chem. 546 (1987) 189-198
  "The effect of "Help Gases" on the formation and stability of Clathrasils"

Au sens de la présente invention, lorsque l'on parle du déca-dodécasil 3R, on vise le composé clathrate traité thermiquement afin d'éliminer les molécules hôtes piégées au cours de la synthèse, et en particulier le 1-aminoadamantane, c'est-à-dire que l'on vise le composé possédant des propriétés de zéolite.

Selon un premier aspect de la présente invention, le déca-dodécasil 3R est utilisé pour l'extraction de gaz carbonique à partir d'un milieu gazeux le contenant.

Pour ce faire, on fait passer le milieu gazeux a traiter sur ou à travers un lit de déca-dodécasil 3R, à une pression, à une température et à un débit choisis de façon à permettre l'élimination désirée de $CO_2$.

Grâce aux propriétés et aux caractéristiques uniques du déca-dodécasil 3R parmi la classe des tamis moléculaires, et notamment en raison de la taille des canaux, la température et la pression d'adsorption utilisées peuvent être proches de la température et de la pression ambiantes, c'est-à-dire une température de 10 à 30°C environ et une pression voisine de la pression atmosphérique. Ceci constitue un avantage décisif de la présente invention, notamment dans le cadre du traitement des atmosphères habitées par des êtres humains ou animaux.

EP 0 633 050 A1

Cependant, on peut également, si on le désire, réaliser l'adsorption dans des gammes de température et de pression beaucoup plus larges. Ainsi, des températures comprises entre - 40°C et 80°C, de préférence entre - 20°C et 70°C peuvent être utilisées.

De même, des pressions comprises entre $10^4$ et $10^6$ Pascals, et plus préférentiellement entre $5.10^4$ et $5.10^5$ Pascals peuvent être choisies.

Plusieurs milieux peuvent être traités afin d'en éliminer, partiellement ou totalement, le gaz carbonique. Lorsque ces milieux ne se présentent pas sous forme gazeuse, ils sont transformés en une phase essentiellement gazeuse préalablement au traitement sur le déca-dodécasil 3R.

L'un des principaux intérêts de l'utilisation du déca-dodécasil 3R pour l'extraction du $CO_2$ réside dans le traitement de l'air ambiant dans des atmosphères confinées sans possibilité d'aération, telles que l'on en rencontre, par exemple, dans les sous-marins et les vaisseaux spatiaux. L'air à traiter possède le plus généralement un taux d'humidité compris entre 20 % et 80 %, et la composition désirée après traitement est généralement voisine de celle présentée ci-dessous :

|  | % en volume | pression partielle KPa |
|---|---|---|
| $O_2$ | 20.93 | 21.1 |
| $CO_2$ | 0.03 | 0.03 |
| $N_2$ | 79.04 | 79.8 |

Outre les constituants que sont l'oxygène, l'azote, le gaz carbonique et l'humidité (vapeur d'eau), l'air peut contenir d'autres composés comme l'acétone, l'hydrogène sulfuré, le benzène, le monoxyde de carbone, le chloroforme, le 2-éthoxy éthyl acétate, le fréon-11, le méthane, l'acétate de méthyle, le chlorure de méthyle, le phénol, le propanol-2, l'acide pyruvique, le toluène, le trichloroéthylène, l'ammoniac, l'éthanol, l'éthylbenzène, l'oxyde d'éthylène, le dichloroéthane, le trichloroéthane, le n-hexane, l'hydrogène, l'acide cyanhydrique, le limonène, le méthylcyclohexane, le styrène, le méthylpentane, le xylène.

L'oxygène (3.5 Å) et l'azote (3.6 Å) ont tous deux des diamètres cinétiques sensiblement plus grands que celui du $CO_2$ (3.3 Å) et de plus, le moment quadrupolaire de la molécule d'azote est tel que l'adsorption du $CO_2$ se réalise préférentiellement.

L'un des caractères, et l'un des avantages, essentiels du déca-dodécasil 3R est qu'il n'adsorbe pas d'eau, grâce à ses propriétés essentiellement hydrophobes.

Enfin, il s'avère que par rapport à la grande majorité des contaminants de l'air précédemment cités, le $CO_2$ est toujours sélectivement adsorbé, essentiellement en raison de la taille des canaux du déca-dodécasil 3R et des moments polaires.

Bien entendu, on utilise le déca-dodécasil 3R pour l'extraction du $CO_2$ de l'air ambiant dans des conditions et des quantités choisies en fonction de la quantité d'air à traiter et du taux d'extraction voulu.

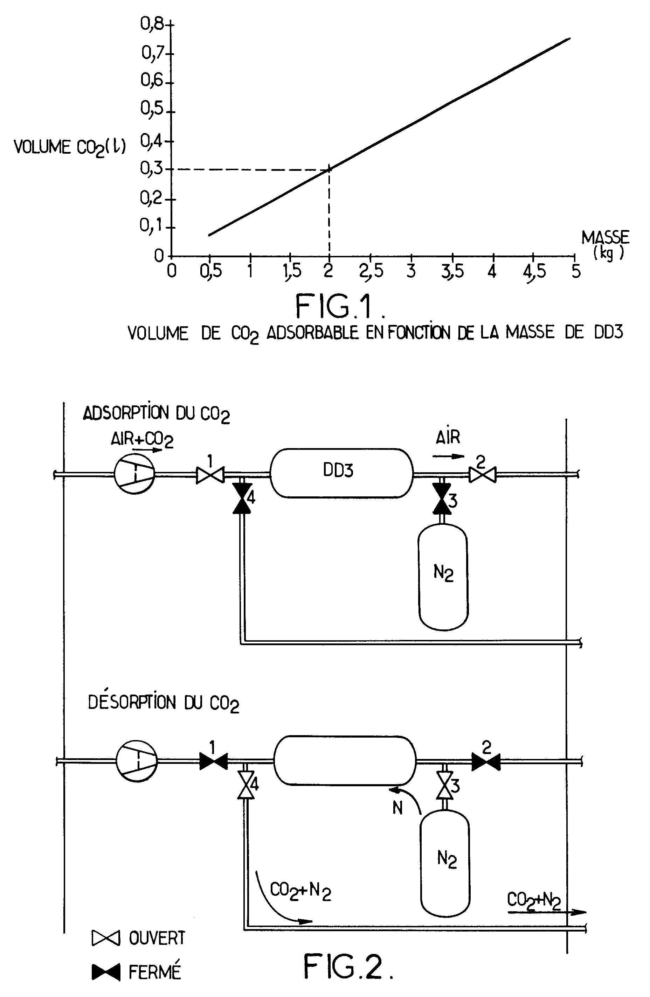

La figure 1 représente, pour une pression et une température standards, le volume de $CO_2$ (en litres) théoriquement adsorbable sur le déca-dodécasil 3R (ci-après dénommé DD3) en fonction de la masse de DD3 utilisée (en kg).

Le milieu gazeux à purifier peut être traité sur le DD3 en mode continu, en utilisant plusieurs récipients ou cartouches, ou en mode séquentiel.

Périodiquement, selon la quantité de $CO_2$ contenue dans l'atmosphère traitée, le déca-dodécasil deviendra bien évidemment saturé en $CO_2$, toutes les cages devenant progressivement remplies de $CO_2$, et l'adsorption du gaz carbonique ne se réalisera plus ou commencera à se réaliser de façon moins efficace.

Le pourcentage du volume total de déca-dodécasil 3R pouvant être occupé par le $CO_2$ est d'environ :

$$\frac{\text{Volume des cages à 19 côtés}}{\text{volume de la maille}} = \frac{6 \times 350 \text{ Å}^3}{6802 \text{ Å}^3} \times 100 = 30.87\%$$

Ainsi, environ 0.309 litres de $CO_2$ peuvent être théoriquement adsorbés sur 1 litre de DD3 sous des conditions de pression et de température standards. Cependant, comme cela a été précédemment mentionné, une adsorption plus élevée peut éventuellement être obtenue en diminuant ou en augmentant la température du système durant l'adsorption.

4

Dès que le déca-dodécasil 3R devient saturé, il y a lieu de le régénérer, c'est-à-dire de lui faire subir un traitement conduisant à la désorption du $CO_2$.

De préférence, ce traitement de régénération est effectué en balayant le déca-dodécasil 3R saturé avec un fort courant d'azote. Toutefois, un cycle thermique peut être également utilisé, ce cycle thermique consistant à porter le DD3 saturé à une température supérieure à 50°C, et de préférence supérieure à 65°C, soit sous balayage d'azote, soit sous vide partiel.

En outre, la désorption du $CO_2$ peut également être réalisée en faisant subir au DD3 saturé un rapide changement de pression.

L'invention vise le procédé préférentiel de régénération du déca-dodécasil 3R saturé en $CO_2$, ce procédé étant essentiellement caractérisé par le fait qu'il consiste à soumettre le déca-dodécasil 3R saturé à un balayage d'azote, éventuellement à une température légèrement supérieure à la pression d'adsorption du $CO_2$, jusqu'à ce que le $CO_2$ adsorbé soit éliminé en majeure partie. De préférence, la pression d'azote sous laquelle est effectuée la désorption du $CO_2$ est supérieure à la pression atmosphérique.

L'invention vise également un dispositif d'extraction du $CO_2$ à partir de milieux gazeux le contenant, ce dispositif étant caractérisé en ce qu'il comporte au moins un récipient fermé dans lequel est disposé du déca-dodécasil 3R, ce récipient étant muni de moyens d'amenée du milieu gazeux à traiter et de moyens d'évacuation du milieu gazeux traité.

De préférence, le récipient fermé contenant le déca-dodécasil 3R est également muni de moyens d'amenée d'azote destiné à assurer la régénération, ainsi que de moyens d'évacuation de l'azote chargé en $CO_2$.

Ces différents moyens d'arrivée et d'évacuation des mélanges gazeux à traiter, d'azote et d'azote chargé en $CO_2$ sont de préférence munis d'électrovannes. La figure 2 montre la configuration d'un système d'extraction du $CO_2$ conforme à l'invention comportant une cartouche de déca-dodécasil 3R et travaillant en phase d'adsorption de $CO_2$ puis en phase de désorption de $CO_2$, la désorption étant effectuée grâce à un balayage inverse d'azote.

Selon une réalisation préférentielle, le dispositif d'extraction du $CO_2$ conforme à l'invention comporte au moins deux récipients fermés munis de déca-dodécasil 3R, ces récipients étant munis de moyens d'amenée et d'évacuation des milieux gazeux à traiter, d'azote servant à la désorption et d'azote chargé en $CO_2$, et est caractérisé par le fait que l'un desdits récipients travaille en adsorption tandis que l'autre travaille en désorption, puis inversement. Un tel dispositif permet l'extraction du $CO_2$ en continu. Le séquençage des phases d'adsorption et de désorption sur chacun des récipients peut être réalisé par une simple minuterie, ou peut être asservi à un dispositif de contrôle de la teneur en $CO_2$ du gaz sortant du récipient travaillant en adsorption.

En général, on peut se baser sur une production de gaz carbonique de 0.5 à 1.5 kg par homme et par jour (voir notamment "Physiologie de l'activité physique, Energie, Nutrition et Performance"; WD. McARDEE, F. KATCH, V. KATCH; ainsi que "Tables scientifiques" 7th Edition, Geigy).

En prenant pour hypothèse que le pourcentage de gaz carbonique dans l'air traité ne doit pas changer, c'est-à-dire rester établi à environ 0,03 %, et en prenant également pour hypothèse une production de 1,5 kg de $CO_2$ par homme et par jour, on peut estimer que le traitement de l'atmosphère nécessite une quantité d'environ 3 kg de déca-dodécasil 3R par minute et par homme.

Selon un second aspect de la présente invention, le déca-dodécasil 3R est utilisé pour la détection et/ou la mesure du gaz carbonique dans un milieu gazeux le contenant.

On met en effet à profit la sélectivité exceptionnelle du déca-dodécasil 3R pour le $CO_2$ pour analyser le taux de $CO_2$ contenu dans un milieux gazeux.

La mesure du $CO_2$ revêt une grande importance pour n'importe quel environnement clos habité par des organismes vivants. Elle revêt également une grande importance pour des systèmes biologiques tels que le stockage des fruits et des légumes, ainsi que pour d'autres applications telles que la détection de la pollution dans les atmosphères des villes et des sites industriels, ou pour la détermination de l'efficacité d'une combustion par exemple.

L'utilisation du déca-dodécasil 3R pour cette mesure du $CO_2$ présente des avantages essentiels étant donné que cette mesure peut être réalisée de façon très précise, dans des conditions de température et de pression standards et étant donné que la présence de contaminants tels que l'eau ou les produits aromatiques par exemple n'interfère pas dans les résultats de l'analyse, puisque ces contaminants sont très peu ou pas adsorbés par le DD3.

L'utilisation du déca-dodécasil 3R pour la détection ou la mesure du $CO_2$ est, conformément à l'invention, basée sur la différence de conductivité électrique entraînée par l'adsorption du $CO_2$ sur le déca-dodécasil 3R.

Ainsi si l'on dépose des cristaux de déca-dodécasil 3R en couche mince, et de préférence en monocouche, sur un support mince conducteur, la mesure de la conductance entre la surface exposée des cristaux de DD3 et le support conducteur donnera l'indication de la teneur en $CO_2$ du mélange gazeux à analyser.

En effet, le DD3 avant adsorption du $CO_2$ présente une conductance déterminée et la présence du $CO_2$ dans les cavités modifie cette conductance jusqu'à une valeur limite atteinte pour la saturation. C'est le temps nécessaire pour arriver à saturation qui indique la concentration de $CO_2$ après étalonnage adéquat.

L'utilisation de couches minces, et de préférence de monocouche, assure un temps de saturation suffisamment court pour pouvoir considérer que la mesure du $CO_2$ est ponctuelle.

A titre d'exemple, la monocouche de DD3 peut être déposée en une épaisseur d'environ 200 nanomètres, sur une plaque d'environ 1 cm x 1 cm de silice.

Après utilisation, le système peut être régénéré à l'aide des procédés de régénération précédemment décrits, notamment grâce à un cycle thermique.

L'efficacité de la régénération ainsi qu'une dérive éventuelle de la sonde sont contrôlées par la conductance avant adsorption et la conductance à saturation.

La détection et la mesure de la quantité de $CO_2$ présente dans un gaz à analyser peut également être réalisée en mettant à profit l'absorption du gaz carbonique dans l'infra-rouge, dans la zone allant d'environ 2000 cm$^{-1}$ à 2500 cm$^{-1}$.

On dispose ainsi, grâce à la présente invention, de moyens simples, économiques et performants permettant l'extraction, ainsi que la détection et la détermination de gaz carbonique dans des milieux gazeux le contenant.

**Revendications**

1. Utilisation de déca-dodécasil 3R pour l'adsorption de gaz carbonique à partir d'un milieu gazeux le contenant.

2. Utilisation de déca-dodécasil 3R selon la revendication 1 pour l'extraction de gaz carbonique à partir d'un milieu gazeux le contenant.

3. Utilisation selon la revendication 2, caractérisée par le fait que l'on fait passer le milieu gazeux sur du déca-dodécasil 3R à une température de -40°C à 80°C, de préférence de - 20°C à 70°C.

4. Utilisation selon l'une des revendications 2 ou 3, caractérisée par le fait que l'on fait passer le milieu gazeux sur du déca-dodécasil 3R à une pression comprise entre $10^4$ et $10^6$ Pascals, de préférence entre $5.10^4$ et $5.10^5$ Pascals.

5. Utilisation selon l'une quelconque des revendications 2 à 4, caractérisée par le fait que l'on fait passer le milieu gazeux sur du déca-dodécasil 3R à une température et à une pression proches de la pression et de la température ambiantes.

6. Dispositif d'extraction du $CO_2$ à partir d'un milieu gazeux le contenant, caractérisé en ce qu'il comporte au moins un récipient fermé dans lequel est disposé du déca-dodécasil 3R, ce récipient étant muni de moyens d'amenée du milieu gazeux à traiter et de moyens d'évacuation du milieu gazeux traité.

7. Dispositif d'extraction selon la revendication 6, caractérisé par le fait que le récipient fermé dans lequel est disposé le déca-dodécasil 3R est également muni de moyens d'amenée d'azote destiné à assurer la régénération, ainsi que de moyens d'évacuation de l'azote chargé en $CO_2$.

8. Dispositif selon l'une ou l'autre des revendications 6 et 7, caractérisé par le fait que les moyens d'arrivée et d'évacuation des mélanges gazeux à traiter, d'azote et d'azote chargé en $CO_2$ sont munis d'électrovannes.

9. Dispositif selon l'une quelconque des revendications 6 à 8, caractérisé par le fait qu'il comporte au moins deux récipients fermés munis de déca-dodécasil 3R, ces récipients étant munis de moyens d'amenée et d'évacuation des milieux gazeux traités, d'azote servant à la désorption et d'azote chargé en $CO_2$, et caractérisé par le fait que l'un desdits récipients travaille en adsorption en même temps que l'autre travaille en désorption.

**10.** Utilisation de déca-dodécasil 3R pour la mesure et/ou la détection de gaz carbonique à partir de milieux gazeux le contenant.

**11.** Utilisation selon la revendication 10, caractérisée par le fait que la mesure et/ou la détection du $CO_2$ est effectuée par mesure de la différence de conductance existant entre des cristaux de déca-dodécasil 3R et un support électroconducteur sur lequel ils sont déposés.

**12.** Utilisation selon la revendication 10, caractérisée par le fait que la mesure et/ou la détection du $CO_2$ est effectuée par mesure de l'absorption dans l'infra-rouge.

**13.** Procédé de régénération de déca-dodécasil 3R saturé en gaz carbonique, caractérisé par le fait que l'on réalise une désorption du $CO_2$ par balayage du déca-dodécasil 3R saturé à l'aide d'un courant d'azote.

EP 0 633 050 A1

FIG.1.

VOLUME DE CO₂ ADSORBABLE EN FONCTION DE LA MASSE DE DD3

FIG.2.

8

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | US-A-4 775 396 (RASTELLI) <br> --- | | B01D53/02 |
| A | US-A-4 902 844 (ZONES) <br> --- | | |
| A | DD-A-225 123 (TECHN. UNI. DRESDEN) <br> --- | | |
| A | EP-A-0 419 838 (KALI-CHEMIE) <br> ----- | | |

**DOMAINES TECHNIQUES RECHERCHES (Int.Cl.6)**

B01D
C01B

Le présent rapport a été établi pour toutes les revendications

| Lieu de la recherche | Date d'achèvement de la recherche | Examinateur |
|---|---|---|
| LA HAYE | 22 Novembre 1993 | WENDLING, J |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)